# EUROPEAN PATENT APPLICATION

(11) **EP 1 689 174 A2**
(43) Date of publication of application: **09.08.2006**
(21) Application number: 06101030.2
(22) Date of filing: 30.01.2006
(51) Int. Cl.: H04N 5/445

(54) **Broadcast receiving apparatus**

(30) Priority: 07.02.2005 KR 2005011093
(71) Applicant: Samsung Electronics Co., Ltd., Suwon-si Gyeonggi-do (KR)
(72) Inventor: Kang, Eun-young, Yeongtong-gu, Suwon-si Gyeonggi-do (KR)
(74) Representative: Read, Matthew Charles

(57) **Abstract**

A broadcast receiving apparatus includes means for receiving a command to switch to a given screen and means for controlling a display, the controlling means configured to count time required to switch screens and to cause the time to be displayed on the display.

## Description

The present invention relates to a broadcast receiving apparatus.

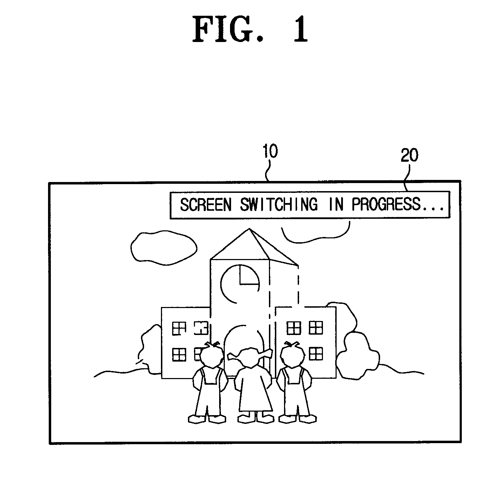

Figure 1 shows a screen switching display function of a conventional broadcast receiving apparatus.

Referring to Figure 1, conventionally, messages 20 such as "Screen switching is in progress..." or "Loading..." are displayed on a screen 10 while screens are being switched. For example, when a user operates a remote controller to switch channels or to select an additional service while watching a broadcast program on a given channel, a message 20 is displayed on the screen 10 until the screen is switched to another screen displaying the selected channel or listing the additional services.

Due to advancements in digital broadcasting, broadcasting stations provide various kinds of additional information to users and so a large amount of information can be displayed.. The additional information includes Multimedia and Hypermedia information coding Expert Group (MHEG) data, Multimedia Home Platform (MHP) data, Electronic Program Guide (EPG) data, and the like, and provide various kinds of information to users, in addition to video and audio services.
Thus, as the number of additional services grows, the time taken to switch to a screen listing additional services can take longer.

If the time taken to switch screens is too long, then the user may incorrectly infer that the broadcast receiving apparatus has malfunctioned. If the user continues to operate the remote controller by pressing keys, then this may result in switching to a screen displaying unwanted additional services.

The present invention seeks to ameliorate this problem.

According to first aspect of the present invention there is provided a broadcast receiving apparatus comprising means for receiving a command to switch to a given screens and means for controlling a display configured to count time required to switch screens and to cause the time to be displayed on the display.

The apparatus may further comprise a display. The apparatus may further comprise a buffer configured to store at least one switching time, wherein the controlling means is configured to cause a longest switching time, a latest switching time taken to switch screens most recently and/or an average switching time of one or more switching times stored in the buffer to be displayed on the display. The controlling means may be configured to cause the switching time to be displayed in the form of a progress bar.

According to a second aspect of the present invention there is provided a method of displaying the screen switching time of a broadcast receiving apparatus, the method comprising receiving a command for switching to a certain screen, counting a switching time required to switch screens and displaying the switching time on a screen.

The method may comprise further displaying a longest switching time, a latest switching time taken to switch screens most recently, and/or average switching time of one or more stored switching times

According to a second aspect of the present invention there is provided a computer program comprising instructions for causing a broadcast receiving apparatus to perform the method.

An embodiment of the present invention will now be described, by way of example, with reference to the accompanying drawings in which:
Figure 1 shows a screen switching display function of a conventional broadcast receiving apparatus;
Figure 2 is a block diagram showing a configuration of an embodiment of a broadcast receiving apparatus according to the present invention;
Figure 3A shows a first example of a screen switching time display function of broadcast receiving apparatus in accordance with the present invention;
Figure 3B shows a second example of a screen switching time display function of a broadcast receiving apparatus in accordance with the present invention; and
Figure 4 is a flowchart explaining operation of a broadcast receiving apparatus in accordance with the invention.

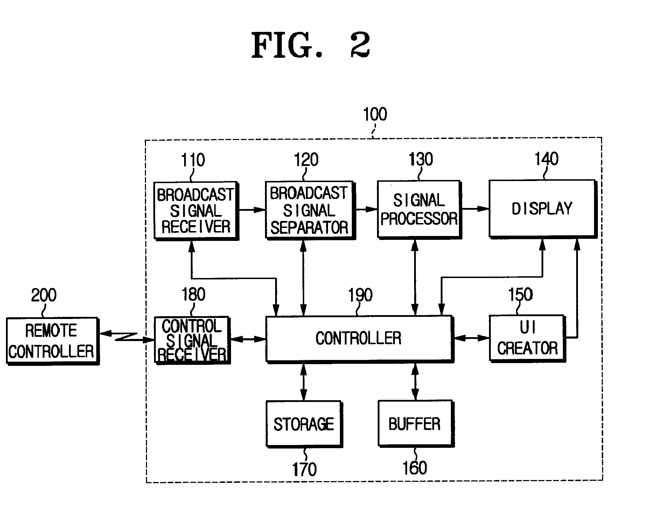

Referring to Figure 2, an embodiment of a broadcast receiving apparatus 100 according to the present invention is shown in the form of a block diagram. The broadcast receiving apparatus 100 comprises a broadcast signal receiver 110, a broadcast signal separator 120, a signal processor 130, a display 140, a UI creator 150, a buffer 160, storage 170, a control signal receiver 180 and a controller 190.

The broadcast signal receiver 110, under the control of the controller 190, receives broadcast signals transmitted from a broadcasting station. The broadcast signals are transmitted from the broadcasting station to the broadcast receiving apparatus 100 through, for example, ground waves, wires,satellites or another route.

The broadcast signal separator 120 demodulates received broadcast signals into base-band signals and separates the signals into video, audio and additional service signals. The video signals are signals for displaying images.The audio signals are signals for outputting sounds. The additional service signals are signals including MHEG data, MHP data, EPG data, and the like for providing various kinds of information to users.

The MHEG is a specification standardized by ISO/IEC JTC 1/SC 29/WG 12 in order to represent multimedia and hypermedia information objects in the form of codes using diverse media so that applications and services are compatible with each other. The MHP is a specification similar to the Directory Access Service Element (DASE) of the Advanced Television System Committee (ATSC). Regardless of the transmission route, applications are provided in the form of diverse terminals such as a DVB (Digital Video Broadcasting) compatible network, low-end and high-end set-top boxes, integrated digital TV (iDTV) and multimedia PCs. The EPG is an electronic program guide including the title of a broadcast program, channel number, broadcasting time, and broadcast contents. By referring to the EPG, a user can select and watch a preferred program from among several programs and can confirm, in advance, information about the programs to be broadcast in the coming hours.

The signal processor 130 performs signal processes on video and audio signals in order to output images and sounds. At this point, a user operates a remote controller 200 or a keypad (not shown) in order to set a video mode or audio mode and the controller 190 controls the signal processor 130 in order to perform signal processes on the video and audio signals according to the set mode.

The display 140 outputs the video and audio signals processed by the signal processor 130 as images and sounds. At this point, the images outputted from the display 140 include the signal-processed video signals and the UI windows created by the UI creator 150. Also, when screens are switched, the display 140 displays the time required to switch screens, together with the images.

The UI creator 150 creates UI windows for providing users with On Screen Display's (OSD) and additional services needed to perform the operations of the broadcast receiving apparatus 100. An OSD menu is created in order to determine whether switching times are displayed automatically or displayed manually according to a user's instructions via the remote controller 200, when switching screens. In addition, a UI window listing the MHEG data, MHP data, and EPG data separated at the broadcast signal separator 120 is created. Through UI windows, a user can confirm additional services provided by broadcasting stations and can input commands for requesting certain services from the broadcasting stations.

At least one switching time required to switch screens is stored in the buffer 160. The controller 190 counts the switching time required to switch screens and stores it in the buffer 160 sequentially. Such a switching time includes the latest switching time taken to switch screens most recently.

Various control data required to perform the operations of the broadcast receiving apparatus 100 are stored in the storage 170. In addition, various additional signals such as the MHEG data, MHP data, and EPG data separated from broadcast signals are stored in the storage 170.

The control signal receiver 180 receives external control signals from a user entered through a remote controller 200 or key handler (not shown), such as a keypad, and transfers them to the controller 190. In a case where a user switches a screen currently displayed to a screen of another channel or to a screen displaying additional services that the user wishes to use, the user operates certain keys on the remote controller 200 or the keypad, thereby inputting a screen switch command.

The controller 190 controls the broadcast signal receiver 110 so as to receive the broadcast signals corresponding to the channel selected by a user. In addition, the controller 190 controls the broadcast signal separator 120 so as to separate the broadcast signals into video, audio and additional signals and controls the signal processor 130 so as to perform signal processes on the separated video signals and audio signals in the video mode or audio mode selected by the user. Also, the controller 190 controls the display 140 so that the signal- processed signals are outputted as images and sounds respectively.

Upon receiving a screen switch command through the control signal receiver 180, the controller 190 counts the time required to switch channels or for switching to a screen displaying additional services according to the received screen switch command. Then, the controller 190 controls the display 140 so as to display the switching time on the screen when switching screens. The switching time may be an elapsed time from receiving the command or from another given point in time, such as first displaying the elapsed time.

A user can select, through an OSD menu, whether a switching time is displayed automatically or manually on a screen. In the case where a user selects the automatic display, a switching time is automatically displayed on a screen when screens are switched and, in the case where a user selects the manual display, if the user presses a certain key, a switching time is displayed on a screen when screens are switched.

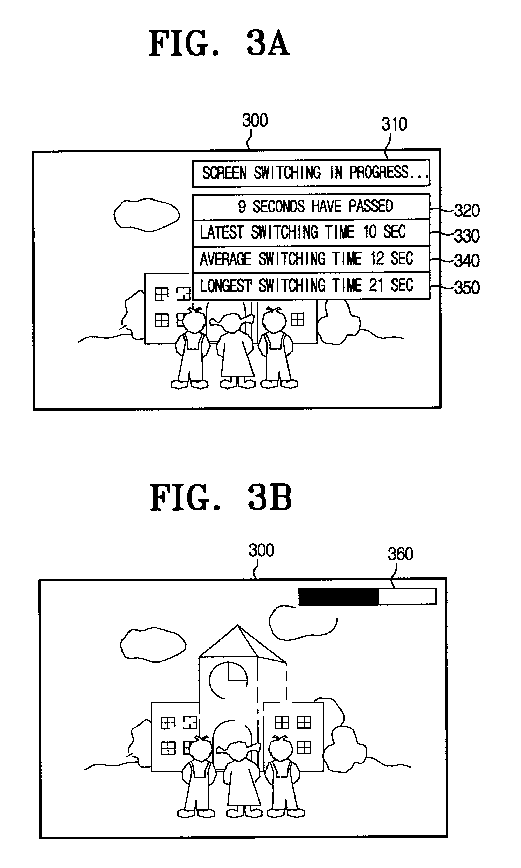

Referring to Figure 3A, a first example of a screen switching time display function of the broadcast receiving apparatus is shown. A switching time 320, latest switching time 330, average switching time 340, and longest switching time 350 are displayed on the screen 300 of the broadcast receiving apparatus 100, together with a message 310 informing the screen switching.

In the switching time 320, a switching time is displayed continuously by the second when screens are switched. If a user enters a screen switch command by handling a certain key, the controller 190 counts the time from the point of receiving the screen switch command, and displays the time on the screen until just before the screens are switched, the time being displayed as "1 second has passed", "2 seconds have passed", ..., "9 seconds has passed", "10 seconds have passed", and so on.

In the latest switching time 330, the switching time taken for the latest screen switching is displayed by the second. For example, if a user inputs a screen switch command, the controller 190 displays the switching time that is written in the buffer 160 most recently as the latest switching time on the screen.

In the average switching time 340, the controller 190 displays the averaged switching time of the switching times stored in the buffer 160 by the second. For example, if a user inputs a screen switch command, the controller 190 averages the switching times stored in the buffer 160 and displays it as the average switching time on the screen.

In the longest switching time 350, the longest switching time from amongst the switching times stored in the buffer 160 is displayed by the second. For example, if a user inputs a screen switch command, the controller 190 displays the longest switching time from amongst the switching times stored in the buffer 160 as the longest switching time on the screen.

Figure 3B shows a second example of a screen switching time display function of the broadcast receiving apparatus.

Referring to Figure 3B, a progress bar 360 representing the processing of a screen switching is displayed on the screen 300 of the broadcast receiving apparatus 100. For example, if a user inputs a screen switch command, the controller 190 counts the time from the point of receiving the screen switch command and fills in the progress bar 360 displayed in white colour with black colour. The user can confirm that screen switching is in progress through the change of the progress bar 360.

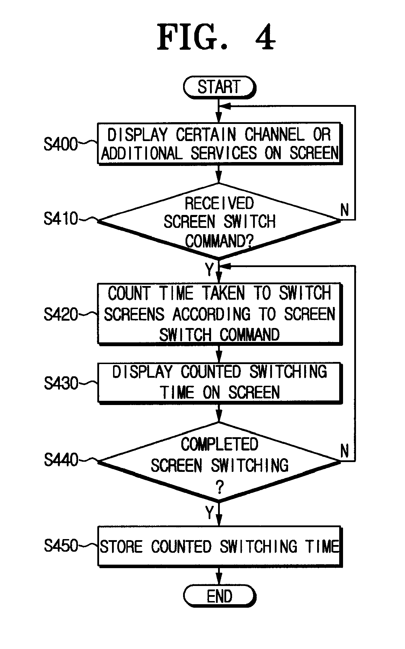

Figure 4 is a flowchart explaining the operation of the broadcast receiving apparatus.

Referring to Figures 2 to 4, the controller 190 displays the program of a certain channel or the list of additional services on the screen according to a user's handling of a remote controller 200 or keypad. For example, the controller 190 controls the broadcast signal receiver 110, broadcast signal separator 120, signal processor 130 and display 140 so as to receive the broadcast signals corresponding to the channel that is selected according to the external control signal, and display the broadcast signals on the screen (step S400).

If a user presses a certain key and enters a screen switch command, the controller 190 receives the screen switch command through the control signal receiver 180 (step S410).

The controller 190 counts the time required to switch screens according to the screen switch command S420, and controls the UI creator 150 and the display 140 so as to display the time being counted on the screen (step S430). For example, the controller 190 counts the time from the point of receiving a screen switch command and displays the latest switching time 330, average switching time 340 and longest switching time 350 on the screen, together with the switching time 320. Otherwise, the switching time can be displayed in the form of a progress bar 360.

At this point, the screen switching time is displayed automatically or manually on the screen according to a preset state determined by the user. For example, if a user sets the screen switching time display function to automatic display through an OSD menu, the controller 190 displays the switching time on the screen upon receiving a screen switch command. If a user selects manual display through an OSD menu, the screen switching time is not displayed, and, when a user handles a certain key, the switching time is displayed on the screen.

If the controller 190 judges that screen switching has been completed (step S440), the counted switching time is written to the buffer 160 (step S450). If the controller 190 judges that screen switching has not been completed, the process returns to step S420 in order to continue counting and displaying the switching time.

Through the processes described above, a screen switching time is displayed on a screen while screens are being switched.

Displaying a screen switching time can help to decrease the irritation felt by the user arising from the delay in switching screens.

It will be appreciated that many modifications may be made to the embodiment hereinbefore described.

## Claims

1. A broadcast receiving apparatus comprising:
means (180) for receiving a command to switch to a given screen; and
means (190) for controlling a display (140), the controlling means configured to count time required to switch screens and to cause the time to be displayed on the display (140).

2. A broadcast receiving apparatus according to claim 1, further comprising a display (140).

3. Apparatus according to claim 1 or 2, further comprising:
a buffer (160) configured to store at least one switching time,
wherein the controlling means (190) is configured to to cause a longest switching time, a latest switching time taken to switch screens most recentlyand/or an average switching time of one or more switching times stored in the buffer to be displayed on the display (140).

4. Apparatus according to any preceding claim, wherein the controlling means (190) is configured to cause the switching time required to switch screens to be displayed in a form of a progress bar.

5. A method of displaying the screen switching time of a broadcast receiving apparatus, the method comprising:
receiving a command for switching to a certain screen;
counting a switching time required to switch screens; and
displaying the switching time on a screen.

6. A method according to claim 5, comprising further displaying a longest switching time, a latest switching time taken to switch screens most recently, and/or average switching time of one or more stored switching times.

7. A computer program comprising instructions for causing a broadcast receiving apparatus to perform a method according to claim 5 or 6.
